# EUROPEAN PATENT SPECIFICATION

(11) **EP 1 237 712 B1**
(45) Date of publication and mention of the grant of the patent: **23.03.2011**
(21) Application number: 00980411.3
(22) Date of filing: 15.11.2000
(51) Int. Cl.: B29D 22/00, B29D 23/00, B32B 1/08, B60R 21/16, D03D 23/00, A41H 5/02, A47C 27/08, B63C 9/28, B29C 65/00

(54) **INFLATABLE FABRIC WITH PEEL SEAMS**
AUFBLASBARER STOFF MIT SCHÄL-SÄUMEN
TOILES GONFLABLES COMPORTANT DES COUTURES PELABLES

(30) Priority: 17.11.1999 US 442253; 22.08.2000 US 643489
(43) Date of publication of application: 11.09.2002
(73) Proprietor: Milliken & Company, Spartanburg, SC 29303 (US)
(72) Inventor: KESHAVARAJ, Ramesh, Peachtree City, GA 30269 (US)
(74) Representative: HOFFMANN EITLE
(86) International application number: PCT/US2000/031441
(87) International publication number: WO 2001/036184

(56) References cited:
- US-A- 3 575 776
- US-A- 3 575 776
- US-A- 3 726 375
- US-A- 5 651 395
- US-A- 5 714 034
- US-A- 6 010 149

## Description

The present invention relates to an inflatable fabric.

The inflatable fabric may be embodied by inflatable fabrics which comprise two separated and distinct fabric layers in discrete areas of such fabrics as well as connecting seam-producing materials (such as C-, Y-, X-, H-, U-, Z-, and W-shaped fabric materials, as merely examples) to which such fabric layers are attached. The resultant inflatable fabric composite includes inflatable areas separated, at least partially, by seamed barrier areas. This configuration will form "pillowed" structures within the target fabric upon inflation. Such connecting seam-producing materials are incorporated within the two-layer structure as peel seams in relation with the individual fabric layers. Upon inflation, the seams then act as shear seams which greatly increases the overall strength of the two-layer inflatable fabric. These shear seams thus provide a relatively effective manner of reducing air permeability within the entire fabric article. Such a fabric may be utilized in numerous and various applications wherein fabric inflation is desired or necessary. In particular, the inventive fabric may be incorporated within an airbag cushion.

Inflatable protective cushions used in passenger vehicles are a component of relatively complex passive restraint systems. The main elements of these systems are: an impact sensing system, an ignition system, a propellant material, an attachment device, a system enclosure, and an inflatable protective cushion. Upon sensing an impact, the propellant is ignited causing an explosive release of gases filing the cushion to a deployed state which can absorb the impact of the forward movement of a body and dissipate its energy by means of rapid venting of the gas. The entire sequence of events occurs within about 30 milliseconds. In the undeployed state, the cushion is stored in or near the steering column, the dashboard, in a door, or in the back of a front seat placing the cushion in close proximity to the person or object it is to protect.

Inflatable cushion systems commonly referred to as air bag systems have been used in the past to protect both the operator of the vehicle and passengers. Systems for the protection of the vehicle operator have typically been mounted in the steering column of the vehicle and have utilized cushion constructions directly deployable towards the driver. These driver-side cushions are typically of a relatively simple configuration in that they function over a fairly small well-defined area between the driver and the steering column. One such configuration is disclosed in US. Patent 5,53 3,755 to Nelsen et al., issued July 9, 1996.

Inflatable cushions for use in the protection of passengers against frontal or side impacts must generally have a more complex configuration since the position of a vehicle passenger may not be well defined and greater distance may exist between the passenger and the surface of the vehicle against which that passenger might be thrown in the event of a collision. Prior cushions for use in such environments are disclosed in U.S. Patent 5,520,416 to Bishop; U. S. Patent 5,454,594 to Krickl; U.S. Patent 5,423,273 to Hawthorn et al.; U.S. Patent 5,316,337 to Yamaji et al.; U.S. Patent 5,310,216 to Wehner et al.; U.S. Patent 5,090,729 to Watanabe; U.S. Patent 5,087,071 to Wallner et al.; U.S. Patent 4,944,529 to Backhaus; and U.S. Patent 3,792,873 to Buchner et al.

The majority of commercially used restraint cushions are formed of woven fabric materials utilizing multifilament synthetic yarns of materials such as polyester, nylon 6 or nylon 6,6 polymers. Representative fabrics for such use are disclosed in U.S. Patent 4,921,735 to Bloch; U.S. Patent 5,093,163 to Krummheuer et al.; U.S. Patent 5,110,666 to Menzel et al.; U.S. Patent 5,236,775 to Swoboda et al.; U.S. Patent 5,277,230 to Sollars, Jr.; U.S. Patent 5,356,680 to Krummheuer et al.; U.S. Patent 5,477,890 to Krummheuer et al.; U.S. Patent 5,508,073 to Krummheuer et al.; U.S. Patent 5,503,197 to Bower et al.; and U.S. Patent 5,704,402 to Bowen et al. A two-weave construction airbag cushion is exemplified in U.S. Patent 5,651,395 to Graham et al. but does not discuss the importance of narrow basket-weave single fabric layers.

As will be appreciated, the permeability of an airbag cushion structure is an important factor in determining the rate of inflation and subsequent rapid deflation following the impact event. Different airbag cushions are utilized for different purposes. For instance, some airbag cushions are installed within inflation modules for driver protection within the steering column of an automobile. Others are utilized as protection for front seat passengers and are installed in and around the glove compartment and/or on the dashboard in front of such a passenger seat. Still others have been developed in an effort to protect all passengers during a long-duration impact event, such as, for example, a rollover collision. In those types of crashes, the target airbag cushion must inflate quickly under high pressure (such as between about 68.95 and 275.79 kPa (10 and 40 psi)) and remain inflated at a relatively high pressures in order to provide the greatest degree of protection to such passengers. Furthermore, such long-duration airbag cushions preferably comprise "pillow" formations created through the attachment of at least two different fabrics or fabric ends together and sealed, sewn, or the like, together. Upon inflation the free space between the attachment points inflate as well, thereby producing the desired cushioned "pillow" structures. Such long-duration, "pillowed" structures have been disclosed in the prior art as airbag cushions within U.S. Patent 5,788,270 to Halano. However, in order to provide a suitable, effective airbag fabric and cushion comprising two or more points of attachment between fabrics or fabric ends, there has been a need to improve upon the structural integrity of the seams at such attachment points to prevent unwanted and potentially harmful leakage of gas or air from within the target airbag cushion. The prior art has discussed the development of coatings to place over the sewn seams at such attachment points in order to seal the potentially loose portions of such seams and/or to keep the individual yarns of the airbag fabrics at the attachment points stationary in order to prevent yam shifting and thus possible openings for air or gas leakage. However, such coatings are actually supplemental to the seam structures in providing the necessary barrier to air or gas. A strong, effective, efficient weave construction is the primary method of initially producing an effective airbag fabric for incorporation within an airbag cushion.

These prior "pillowed" airbag cushions, however, have been produced solely through specific weaving patterns at the attachment points between the two fabric layers. The possibility of stitch movement during inflation is very high with such airbag cushions. As a result, very thick coatings, as noted above, are required to sustain very low air permeability over the fabric during and after an inflation event. Furthermore, individual sewn seams do not provide consistently low air permeability without utilization of large amounts of relatively expensive coating compositions for the same reasons. The strength and integrity of such seams, particularly present at the surfaces of both fabric layers, are not present without some type of coating to prevent the escape of air during high pressurization of the fabric. Such overall, highly coated, inflatable fabric structures may possess the necessary air permeability characteristics required for proper functioning within a side curtain airbag cushion; however, the costs are extremely high with the amounts of required coatings and the barrier to air leakage provided by such coatings is still suspect (yam shifting will most likely occur during an inflation event which may produce discontinuities in the integrity of the coating which may in turn compromise the long-term air permeability required for certain airbag applications). Alternatives which permit the utilization of an inflatable two-layer fabric alone (or with substantially reduced amounts of necessary coating materials) that provide very strong seams to form "pillowed" structures within such fabrics upon inflation and that do not comprise excessive attachment points between two fabric layers (which would permit dislocation of substantial numbers of stitches that would invariably increase the air permeability rate of the target fabric) would be highly desired in comparison with the costly products now commercially available. To date, the prior art has not accorded the airbag market with such an advancement in this area.

Another prior art inflatable fabric is disclosed in US-A-3,757,776, in which upon inflation the connecting material exhibits a straight shape. The inflatable fabric of D1 is formed as a unitary woven fabric, without seams between the outer fabric and the connecting portions.

Finally, another prior art inflatable fabric is disclosed in DE 197 39 558 in which at least two layers of fabric and a connecting material attached to both layers of fabric exhibit upon inflation a C-shape.

According to the present invention, there is provided an inflatable fabric according to Claim 1 below.

Preferably, the connecting material has first and second ends and front and back front and back sides interposed between the two layers of fabric and simultaneously attached to said two layers of fabric wherein said first end is attached to one layer and said second end is attached to the other layer. Preferably, such inflatable fabrics and connecting materials are all woven in structure.

The term "inflatable fabric" is intended to encompass any fabric that is constructed of at least two layers of fabric which can be sealed to form a bag article. The inflatable fabric of the present application thus must include double layers of fabric to permit such inflation, as well as single layers of fabric either to act as a seal at the ends of such fabric panels, or to provide "pillowed" chambers within the target fabric upon inflation. Hence, the two-layered structure must exist in certain discrete areas of the fabric, if not throughout the entire fabric as shown in the presently disclosed embodiments. The term "all-woven" as it pertains to the inventive fabric thus requires that the inflatable fabric having double and single layers of fabric be produced solely upon a loom. Any type of loom may be utilized for this purpose, such as water jet, air jet, rapier, dobby, and the like.

The utilization of such peel-seam producing connecting materials which, when simultaneously attached to both fabric components of the inflatable structure form shear seams upon inflation, provides a number of heretofore unexplored benefits within inflatable fabric structures. For example, such a connecting material provides a peel seam with each individual layer of fabric upon contact and attachment. However, upon inflation, the peel seams are actually translated to shear seams. Peel seams are well known in the fabric art as attachments between separate layers or portions of fabrics which are pulled apart through a peeling motion between the two layers (i.e., peeled apart in two opposite directions both perpendicular to the two layers). Shear seams, on the other hand, require shear force to detach one layer from the other (i.e., sheared apart in two opposite directions parallel to the two layers). Shear seams are greater in strength than peel seams since the force required to detach, separate, or otherwise destroy the seam must compensate for the force of the seam 180° opposite of the shearing force. Thus, the presence of shear seams provides much greater strength to the two layer article than with merely peel seams. Furthermore, such connecting materials providing shear seams upon inflation permits a simplified manufacturing procedure by placing such materials between two separate fabric layers and attaching each component simultaneously. Such an attachment may be performed through gluing. However, most preferably, and in order to avoid the potential problems with yarn dislocation associated with stitching and the need then for greater amounts of undesirable expensive coating materials, the seams are formed through RF-welding techniques, such as those disclosed in U.S. Patents US 6,344,251 (U.S. Patent Application 09/326,368) to Kesh et al. and US 6,364,356 (U.S. Patent Application 09/406,000) to Kesh. Such techniques involve the production of polymeric beads that adhere the fabrics together and also do not permit air to transfer through the weld itself. Such an efficient process thus translates into cost savings for the consumer. Additionally, such preferred C-shaped materials, providing such strong seams, permit the omission of large amounts of coatings in order to seal the inflatable fabric for permeability reduction. Further methods of attaching these C-shaped materials include adhesives in film, gel, viscous liquid, or solid form.

Although C-shaped connecting materials are highly preferred (due to their ability to unfold upon inflation and thus permit expansion of the inflatable structure to a certain degree prior to existence of the desired shear seam configuration), other shapes are also possible. Most notably, and without limitation, the connecting materials, may also be X-sbaped (thereby providing two locations of attachment on each fabric layer). The X-shaped materials provide similar benefits of expansion upon inflation as well as balanced inflation pressure on each portion of the connecting materials during inflation (i.e., each segment of X-shaped materials will be subjected to the same pressures) as do the C-shaped materials. Other shapes may be utilized; the only limitation is that any such materials must create shear seams when attached to the two fabric layers both during and after inflation of the inflatable fabric structure.

The inflatable fabric itself is preferably produced from all-synthetic fibers, such as polyesters and polyamides; although natural fibers may also be utilized in certain circumstances. Preferably, the fabric is constructed of nylon-6,6. The individual yarns utilized within the fabric substrate must generally possess deniers within the range of from about 40 to about 840; preferably from about 100 to about 630. The preferred connecting materials (again such as, but not limited to, C-shapcd materials) are fabric in structure. More preferably they are woven and most preferably they have the same structure as utilized for the two layers of fabric themselves.

Coatings may be applied to the surface as a necessary supplement to the air permeability of the inventive fabric. Since one ultimate use of this inventive fabric is as a side curtain airbag which must maintain a very low degree of air permeability throughout a collision event (such as a rollover where the curtain must protect passengers for an appreciable amount of time), a decrease in permitted air permeability is highly desirable. Any standard coating, such as a silicone, polyurethane, polyamide, polyester, rubber (such as neoprene, for example), and the like, may be utilized for this purpose and may be applied in any standard method and in any standard amount on the fabric surface.

Additional objects and advantages of the invention will be set forth in part in the description which follows, and in part will be obvious from the description, or may be learned by practice of the invention. It is to be understood that both the foregoing general description and the following detailed description of preferred embodiments are exemplary and explanatory only.

The accompanying drawings, which are incorporated in and constitute a part of this specification, illustrate several purely exemplary embodiments of the invention and together with the description serve to explain the principles of the invention, in which:
FIG. 1 is a side view of one uninflated airbag including C-shaped pillow-forming materials.
FIG. 2 is a cross-sectional view of the uninflated airbag of FIG. 1 (with C-shaped pillow-forming materials) along line 4.
FIG. 3 is a cross-sectional view of the airbag of FIG. 2 while inflated.
FIG. 4 is K a side view of another uninflated airbag including the C-shaped pillow-forming materials oriented in slanted configurations.
FIG. 5 is a cross-sectional view of an airbag such as in FIG. 1 with Y-shaped pillow-forming materials.
FIG. 6 is a cross-sectional view of an airbag such as in FIG. 1 with X-shaped pillow-forming materials.
FIG. 7 is a cross-sectional view of an airbag such as in FIG. 1 with H-shaped pillow-forming materials.
FIG. 8 is a cross-sectional view of an airbag such as in FIG. 1 with U-shaped pillow-forming materials.
FIG. 9 is a cross-sectional view of an airbag such as in FIG. 1 with another type of C-shaped pillow-forming materials.
FIG. 10 is a cross-sectional view of an airbag such as in FIG. 1 with Z-shaped pillow-forming materials.
FIG. 11 is a cross-sectional view of an airbag such as in FIG. 1 with W-shaped pillow-forming materials.

Pillow-forming materials having a shape other than that recited in claim 1 below are illustrative but not part of the claimed invention.

### Detailed Description of the Drawings

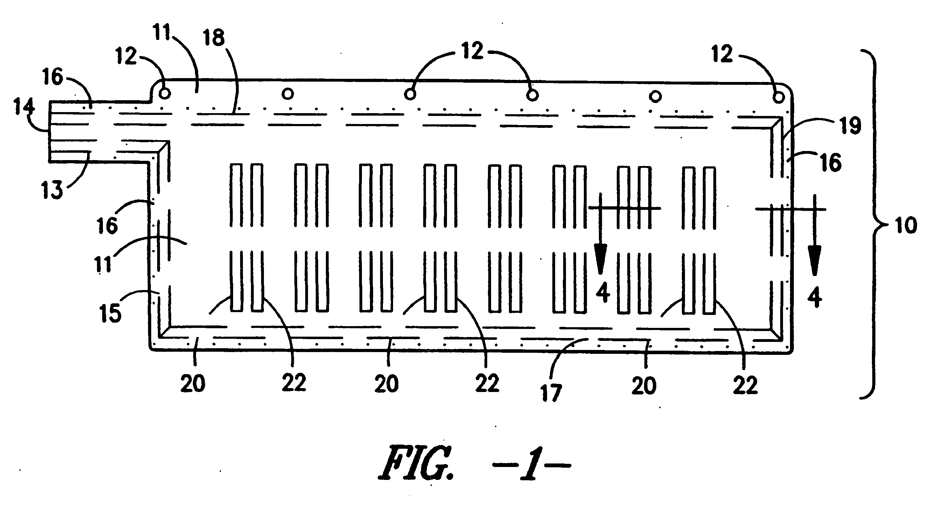

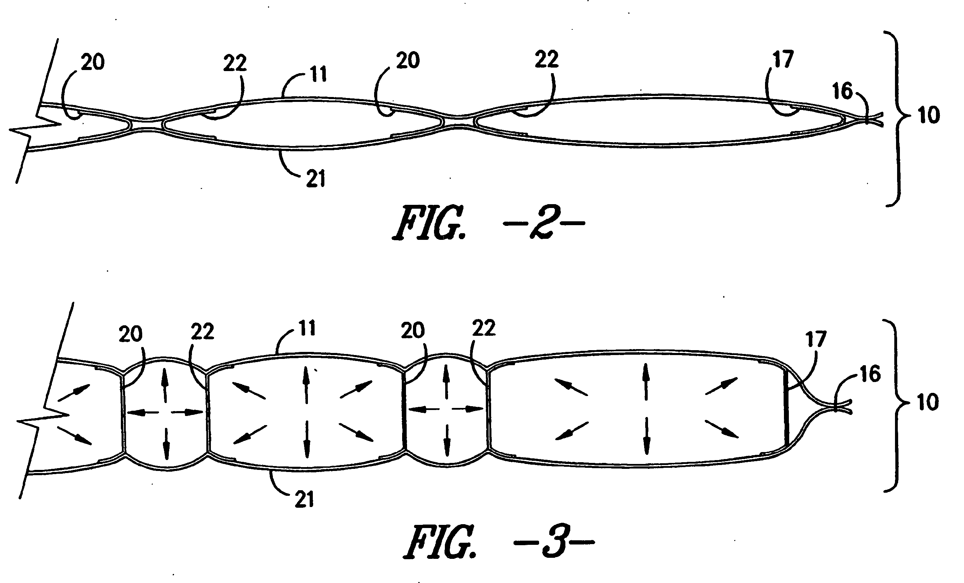

Turning now to the drawings, in FIG. 1 there is shown an unfolded, uninflated airbag 10 which may attach to the inside of a vehicle (not illustrated) at specific bolting points **12** and potentially by way of a supplemental tether system (not illustrated). This airbag **10** includes a first side of fabric **11** and a second side **(21** in **FIGs. 2** and **3****)** which are attached together by, for example, and as illustrated in **FIGs. 2** and **3****)** C-shaped materials along the periphery of the two fabrics **13,15, 17, 18, 19** as well as throughout the mid-portion of the two fabrics **20,22.** Around the periphery materials **13,15,17,18,19** a sewn seam **16** is also utilized to attach the fabrics together as well as to reinforcement the seal formed by such periphery materials **13, 15,17,18,19.** The periphery materials **13, 15,17, 18,19** and the mid-portion materials **20, 22** may be attached to the two fabric sides **11** (and **21** in **FIGs. 2** and **3****)** by any standard means, including but not limited to polymeric beads formed by RF-welding, adhesives, and the like. Preferred are polymeric beads due to the strength provided by such a method to the C-shaped materials seams **13,15, 17, 18,19, 20, 22** as well as the omission of potentially problematic stitching at the fabric layers interface. The introduction of stitches increases the available area of leakage for gas to flow out of the bag. Upon inflation, such stitches would move in relation to the high pressures exerted throughout the bag structure and permit too much gas to escape to properly act as a side cushion in rollover situations. These mid-portion C-shaped materials **20, 22** thus act as attachment points between the two fabric layers **11** (and **21** of **FIGs.** 2 and **3****)** such that upon introduction of a gas into the bag through the inflator opening **14,** the areas of the two-layer airbag **10** which are not attached via these C-shaped mid-portion materials **20, 22** will inflate and form "pillows" or intermittent cushions (not numbered) which provide passengers with a certain degree of protection from sudden movements as well as potentially broken windows.

**FIG. 2** exemplifies the airbag **10** (the same uninflated airbag of **FIG.1****)** in cross-section view. Two layers of fabric **11, 21** are attached to C-shaped materials **17, 20, 22** simultaneously. A seam **16** acts as the sole attachment point for the illustrated portion of the airbag **10** at which the two fabrics **11, 21** are attached together without the benefit of any intermittent materials. In relation to the individual layers of fabric **11, 21,** the C-shaped materials **17, 20, 22** are present in peel seam orientation in the uninflated state. Upon inflation, as depicted in **FIG. 3****,** the C-shaped materials **17, 20, 22** stretch and, since they are simultaneously attached to both fabric layers **11, 21,** are now more prevalently acting as shear seams. Furthermore, the pressures exerted upon each of the stretched C-shaped materials **17, 20, 22** are well balanced since the pressures exerted in one direction are countered with even pressures exerted from the opposite direction at the same time.

This utilization of C-shaped materials **17, 20, 22,** particularly with RF-welding techniques to form the attachments between the materials **17, 20, 22** and the fabrics **11, 21,** permits a considerable reduction in costly required labor as well. Such an airbag 10 may be formed by placing one fabric layer **21** on an apparatus including a weld head (not illustrated), placing the intermittent C-shaped materials **17, 20, 22** around and within the area of the first fabric layer **21** (with the proper polymeric bead-forming materials added thereto), and subsequently placing the second fabric layer **11** over the entire composite. Upon exposure to an electrical field, the weld head (not illustrated) then produces a polymeric bead attachment seam (not illustrated) at the desired locations within the final airbag structure **10.** Again, a seam **16** may be added for reinforcement, etc., purposes; however, the entire bag may be formed in such a simple and straightforward manner without the need for labor-intensive and costly sewing procedures. The resultant airbag **10** should also be coated to a certain degree to provide the necessary long-duration low permeability upon inflation. However, with a reduction in possible areas of leakage, there is a correlative reduction in the need for large amounts of costly coatings.

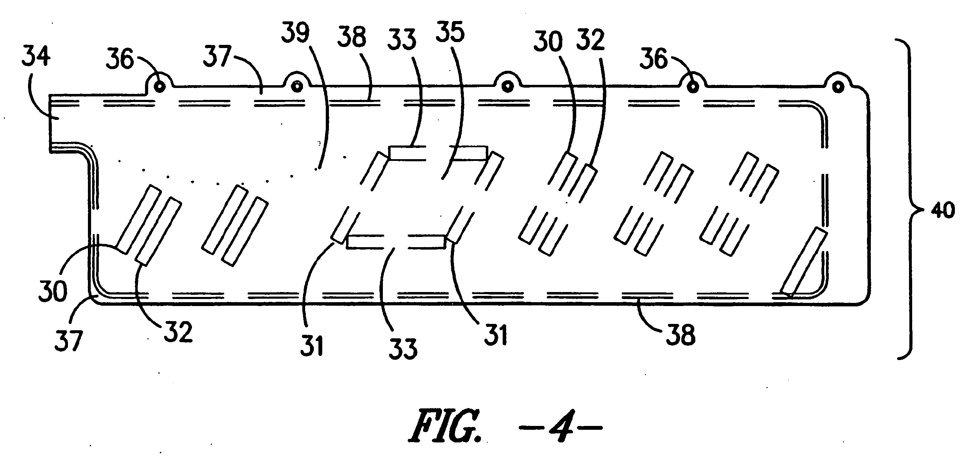

Although **FTG. 1** shows one embodiment of this invention, one of ordinary skill in the art would easily understand that it is of extreme importance that airbag fabrics need to inflate uniformly over the entire structure in response to a collision event. Since only one single point of introduction of inflation gases usually exists within side curtain airbags, there exists a great difficultly in inflating the bag portion opposite the inflation port at the same rate as the area of the bag adjacent thereto. The alternative airbag 40 of FIG. 4 has been constructed to remedy this potential problem by introducing a barrier portion **39** which acts as a sort of "breakwater" to impede the progress of all of the gas introduced through the port **34** into the airbag **40.** The gas must first travel around this barrier **39** before moving into the discrete areas of the airbag **40.** In this manner the entire airbag **40** will inflate substantially uniformly (the same pressures throughout at the same approximate rate). The inventive airbag **40** is attached to the vehicle interior (not illustrated) by way of bolting points **36** and optionally a tether assembly (not illustrated). This airbag **40** forms "pillowed" structures analogous to those described and depicted within FIGs. **1-3** above. However, the C-shaped materials **30, 31, 32, 33** of this airbag 40 are slanted in relation to the fabric layers **37**. This slanted orientation reduces the possibility of peeling of the seams formed by the C-shaped materials **30, 31, 32, 33** from the fabric layers **37** during inflation. Although these formed seams do act as shear seams predominantly during inflation and when simultaneously attached to both fabric layers **37**, the chances of peeling from each individual fabric layer **37** is still possible. This slanted orientation thus aids in reducing such a possibility and also aids in the uniform inflation of the entire bag **40** noted above. The middle C-shaped material seams **31**, **33** are arranged in the area between the front seat and the rear seat of the target vehicle to form a non-inflatable area within the bag **35**. Since this area **35** does not need as much protection as the windows of the vehicle (not illustrated), there is a desire to prevent inflation in that area to increase the inflation rate for the remaining areas of the airbag **40**.

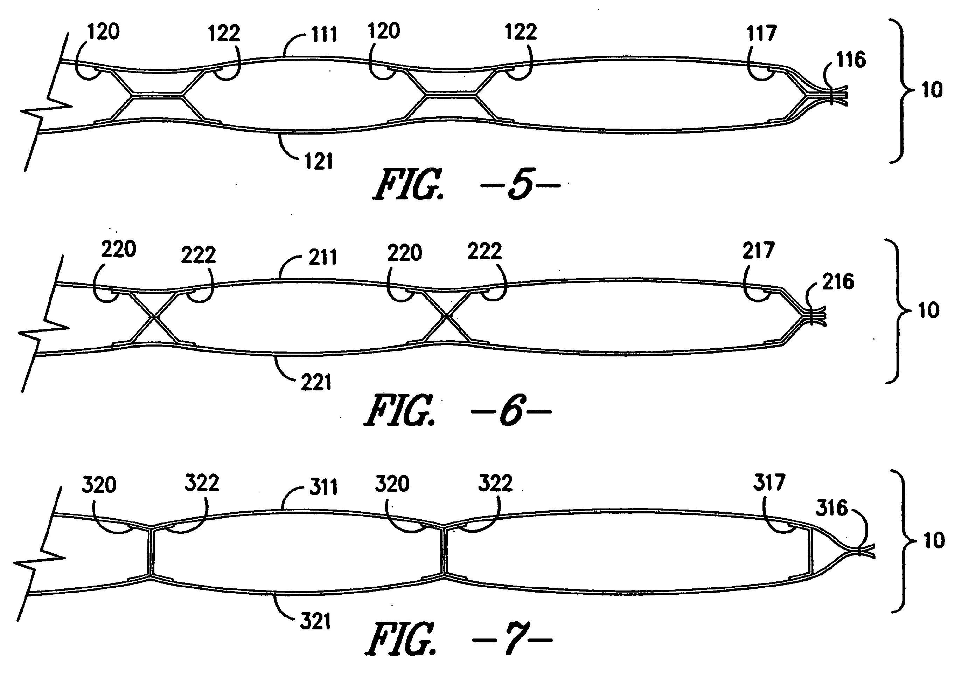

As noted above, other pillow-forming materials of differing shapes may be utilized to form the desired shear seams within the inventive airbags. The remaining figures depict such alternative orientations. **FIG. 5** exemplifies the airbag **10** (the same uninflated airbag of **FIG. 1**) in cross-section view with two layers of fabric **111**, **121** attached to Y-shaped materials **117**, **120**, **122** simultaneously. A seam **116** acts as the sole attachment point for the illustrated portion of the airbag **10** at which the two fabrics **111**, **121** are attached together without the benefit of any intermittent materials. In relation to the individual layers of fabric **111**, **121**, the Y-shaped materials **117**, **120**, **122** are present in peel seam orientation in the uninflated state.

**FIG. 6** exemplifies the airbag **10** (the same uninflated airbag of **FIG. 1**) in cross-section view with two layers of fabric **211**, **221** attached to X-shaped materials **217**, **220**, **222** simultaneously. A seam **216** acts as the sole attachment point for the illustrated portion of the airbag **10** at which the two fabrics **211**, **121** are attached together without the benefit of any intermittent materials. In relation to the individual layers of fabric **211, 221,** the X-shaped materials **217, 220, 222** are present in peel seam orientation in the uninflated state.

**FIG. 7** exemplifies the airbag **10** (the same uninflated airbag of **FIG.1****)** in cross-section view with two layers of fabric **311, 321** attached to H-shaped materials **317, 320, 322** simultaneously. A seam **316** acts as the sole attachment point for the illustrated portion of the airbag **10** at which the two fabrics **311, 321** are attached together without the benefit of any intermittent materials. In relation to the individual layers of fabric **311, 321,** the H-shaped materials **317, 320, 322** are present in peel seam orientation in the uninflated state.

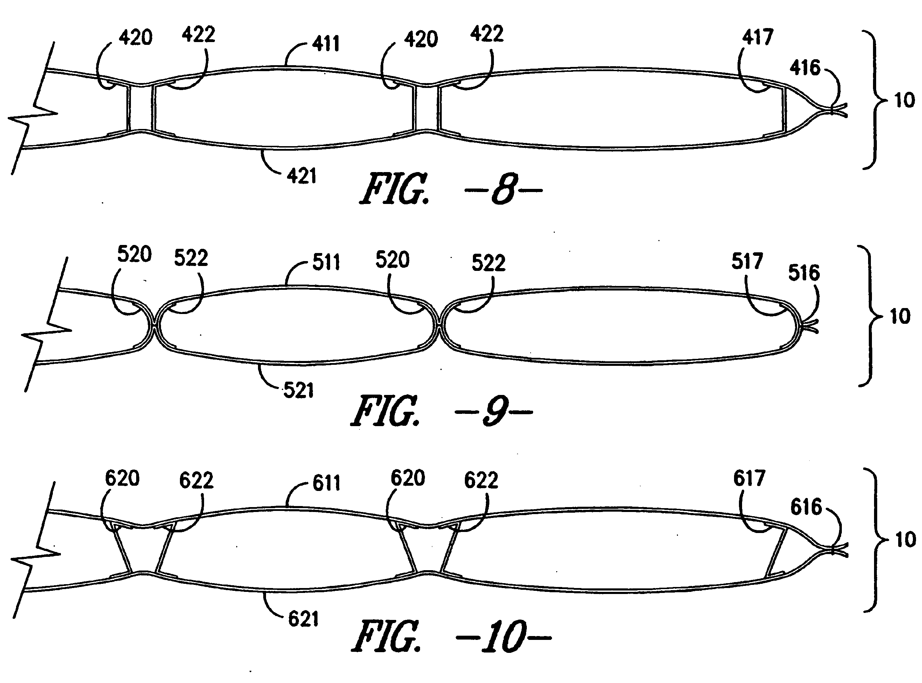

**FIG. 8** exemplifies the airbag **10** (the same uninflated airbag of **FIG.1****)** in cross-section view with two layers of fabric **411, 421** attached to U-shaped materials **417, 420, 422** simultaneously. A seam **416** acts as the sole attachment point for the illustrated portion of the airbag **10** at which the two fabrics **411, 421** are attached together without the benefit of any intermittent materials. In relation to the individual layers of fabric **411, 421,** the U-shaped materials **417, 420, 422** are present in peel seam orientation in the uninflated state.

**FIG. 9** exemplifies the airbag **10** (the same uninflated airbag of **FIG.1**) in cross-section view with two layers of fabric **511, 521** attached to C-shaped materials **517, 520, 522** (which differ in configuration from those in FIG. 2) simultaneously. A seam **516** acts as the sole attachment point for the illustrated portion of the airbag 10 at which the two fabrics **511, 521** are attached together without the benefit of any intermittent materials. In relation to the individual layers of fabric **511, 521,** the Y-shaped materials **517, 520, 522** are present in peel seam orientation in the uninflated state.

**FIG. 10** exemplifies the airbag **10** (the same uninflated airbag of **FIG. 1****)** in cross-section view with two layers of fabric **611, 621** attached to Z-shaped materials **617, 620, 622** simultaneously. A seam **616** acts as the sole attachment point for the illustrated portion of the airbag **10** at which the two fabrics **611, 621** are attached together without the benefit of any intermittent materials. In relation to the individual layers of fabric **611, 621,** the Z-shaped materials **617, 620, 622** are present in peel seam orientation in the uninflated state.

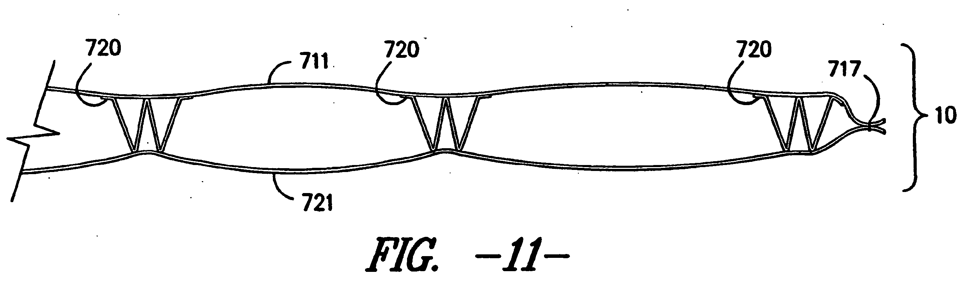

**F1G.11** exemplifies the airbag **10** (the same uninflated airbag of **FIG.1**) in cross-section view with two layers offabric **711, 721** attached to W-shaped materials **720** simultaneously. A seam 717 acts as the sole attachment point for the illustrated portion of the airbag **10** at which the two fabrics **711, 721** are attached together without the benefit of any intermittent materials. In relation to the individual layers of fabric **711, 721,** the W-shaped materials **720** are present in peel seam orientation in the uninflated state.

In general, the pillow-forming materials for each airbag depicted above are preferably rectangular in shape (prior to folding) and folded symmetrically prior to attachment to the target fabric layers. The length of such rectangular materials may be from about 2.54 cm to about 38.1 cm (1 inch to about 15 inches) and the width (prefolded) of such materials may be from about 1.27 cm to about 15.24 cm (1/2 inch to about 6-inches). Preferably, the length is from about 15.24 cm to about 30.5 cm (6 inches to about 12 inches); more preferably from about 15.24 cm to about 25.4 cm (6 inches to about 10 inches). Preferably the prefolded width is from about 1.27 cm to about 10.16 cm (1/2 inch to about 4 inches) leaving each folded portion from about 0.635 to about 5.08 cm (1/4 inch to about 2 inches) wide. The narrower the material, the stronger the provided shear seam upon inflation.

In view of the foregoing, embodiments of the present invention provide an inflatable fabric comprising at least one connecting material which forms a peel seam with the individual components of the inflatable which becomes a shear seam upon inflation. Certain embodiments of the present invention provide an inflatable fabric with at least two layers of fabric which forms pillowed structures upon inflation without the utilization of or need for sewn seams or specific woven structures. Some embodiments of the present invention enable the utilization of such inflatable fabrics as air bag cushions within a vehicle restraint system. The term "vehicle restraint system" is intended to mean both inflatable occupant restraining cushions and the mechanical and chemical components (such as the inflation means, ignition means, propellant, and the like).

While specific embodiments of the invention have been illustrated and described, it is to be understood that the invention is not limited thereto, since modifications may certainly be made and other embodiments using the principles of this invention will no doubt occur to those skilled in the art.

## Claims

1. An inflatable fabric including inflatable pillow areas separated, at least partially, by seamed barrier areas, the inflatable fabric comprising at least two layers of fabric (11,21; 111,121; 211; 221;) in said inflatable pillow areas of the fabric and at least one pillow-forming connecting material (20,22, 120,122; 220,222)
exhibiting, upon inflation of said inflatable fabric, a C-shape or an X-shape, said connecting material bring attached to both of said at least two layers of fabric, wherein each said pillow-forming connecting material exhibits peel seams in relation with the individual fabric layers, when attached to each of said at least two layers of fabric, but exhibits seams acting prevalently as shear seams when attached to both of said at least two layers of fabric, upon inflation of the inflatable fabric, both during and after inflation.

2. The fabric of Claim 1, wherein said connecting material (20,22; 120,122; 220,222) is attached to said two layers of fabric (11,21; 111,121; 211; 221) by welded polymeric beads.

3. The fabric of Claim 1 or 2, wherein at least two separate connecting materials (20,22; 120;122; 220,222) are present, interposed between said two layers of fabric (11,21; 111,121; 211; 221), and simultaneously attached to said two layers of fabric.

4. The fabric of Claim 1, 2 or 3, wherein said at least two layers of fabric (11,21; 111,121; 211; 221) and each said pillow-forming connecting material (20,22; 120,122; 220, 222) are comprised of the same type of fabric.

## Patentansprüche

1. Aufblasbares Gewebe, umfassend aufblasbare Kissenbereiche, die zumindest teilweise durch gesäumte Grenzbereiche getrennt sind, wobei das aufblasbare Gewebe zumindest zwei Gewebeschichten (11, 21; 111, 121; 211, 211) in den aufblasbaren Kissenbereichen des Gewebes und zumindest ein kissenbildendes Verbindungsmaterial (20, 22; 120, 122; 220, 222), das beim Aufblasen des aufblasbaren Gewebes eine C-Form oder eine X-Form aufweist, umfasst, wobei das Verbindungsmaterial an beiden der zumindest zwei Gewebeschichten befestigt ist, wobei jedes kissenbildende Verbindungsmaterial Schälnähte in Beziehung zu den individuellen Gewebeschichten aufweist, wenn es an jeder der zumindest zwei Gewebeschichten befestigt ist, jedoch Nähte aufweist, die vorwiegend als Schernähte wirken, wenn sie an beiden der zumindest zwei Gewebeschichten beim Aufblasen des aufblasbaren Gewebes sowohl während als auch nach dem Aufblasen befestigt sind.

2. Gewebe nach Anspruch 1, bei dem das Verbindungsmaterial (20, 22; 120, 122; 220, 222) an den zwei Gewebeschichten (11, 21; 111, 121; 211, 211) mittels geschweißter Polymerperlen befestigt ist.

3. Gewebe nach Anspruch 1 oder 2, bei dem zumindest zwei Verbindungsmaterialien (20, 22; 120, 122; 220, 222) vorhanden sind, die zwischen zwei Gewebeschichten (11, 21; 111, 121; 211, 211) dazwischen liegen und gleichzeitig an den zwei Gewebeschichten befestigt sind.

4. Gewebe nach Anspruch 1, 2 oder 3, bei dem die zumindest zwei Gewebeschichten (11, 21; 111, 121; 211, 211) und jedes kissenbildende Verbindungsmaterial (20, 22; 120, 122; 220, 222) die gleiche Art Gewebe umfassen.

## Revendications

1. Tissu gonflable incluant des zones de coussins gonflables séparées, au moins en partie, par des zones de séparation cousues, le tissu gonflable comprenant au moins deux couches de tissu (11, 21; 111, 121; 211, 221) dans lesdites zones de coussins gonflables du tissu et au moins un matériau de connexion formant coussin (20, 22; 120, 122; 220, 222) présentant, lors du gonflage dudit tissu gonflable, une forme en C ou une forme en X, ledit matériau de connexion étant fixé sur les deux au moins deux couches de tissu, dans lequel ledit matériau de connexion formant coussin présente des coutures pelables en relation avec les couches de tissu individuelles, quand il est fixé sur chacune desdites au moins deux couches de tissu, mais présente des coutures agissant principalement comme coutures de déchirure quand il est fixé sur les deux au moins couches de tissu, lors du gonflage du tissu gonflable, à la fois pendant et après le gonflage.

2. Tissu selon la revendication 1, dans lequel ledit matériau de connexion (20, 22; 120, 122; 220, 222) est fixé sur lesdites deux couches de tissu (11, 21; 111, 121; 211, 221) par des cordons polymériques soudés.

3. Tissu selon la revendication 1 ou 2, dans lequel au moins deux matériaux de connexion (20, 22; 120, 122; 220, 222) séparés sont présents, intercalés entre lesdites deux couches de tissu (11, 21; 111, 121; 211, 221), et simultanément fixés sur lesdites deux couches de tissu.

4. Tissu selon la revendication 1, 2 ou 3, dans lequel lesdites au moins deux couches de tissu (11, 21; 111, 121; 211, 221) et chaque dit matériau de connexion formant coussin (20, 22; 120, 122; 220, 222) est composé du même type de tissu.
